# EUROPEAN PATENT APPLICATION

(11) **EP 4 589 675 A1**
(43) Date of publication of application: **23.07.2025**
(21) Application number: 23914608.7
(22) Date of filing: 29.12.2023
(51) Int. Cl.: H01M 4/13, H01M 4/36, H01M 10/0525, H01M 10/056

(54) **BATTERY CELL, BATTERY, AND ELECTRIC DEVICE**

(30) Priority: 05.01.2023 CN 202310014852
(71) Applicant: Contemporary Amperex Technology (Hong Kong) Limited, Central (HK)
(72) Inventor: FU, Hanli, Ningde, Fujian 352100 (CN); LI, Zhenhua, Ningde, Fujian 352100 (CN); ZHU, Jiazhe, Ningde, Fujian 352100 (CN); ZHANG, Yu, Ningde, Fujian 352100 (CN); LI, Xing, Ningde, Fujian 352100 (CN); NIU, Shaojun, Ningde, Fujian 352100 (CN); JIN, Haizu, Ningde, Fujian 352100 (CN)
(74) Representative: Kraus & Lederer PartGmbB
(86) International application number: PCT/CN2023/143468
(87) International publication number: WO 2024/146477

(57) **Abstract**

A battery cell, a battery, and an electric device. The battery cell includes an electrode assembly and an electrolyte solution. The electrode assembly includes a positive electrode sheet, a negative electrode sheet, and a separator. The electrolyte solution includes an organic solvent and an electrolyte salt dissolved in the organic solvent. The electrolyte salt includes a lithium salt and another alkali metal salt different from the lithium salt. A value of the compacted density of the positive electrode sheet is in a range of 2.8 g/cm³ to 4.0 g/cm³. The radii of alkali metal ions in the another alkali metal salt are greater than those of lithium ions, and the alkali metal ions can be intercalated into some lithium sites of a positive electrode in a first discharging process, to improve structural stability, and increase components of organic lithium in an SEI in a formation process of an SEI film during first charging and discharging, thereby improving co-intercalation of solvent molecules, and improving cycling performance of an electrode. **In** addition, the compacted density is set in the above range, so that other alkali metal ions can be efficiently intercalated into some lithium sites of the positive electrode and play an effective supporting role therein.

## Description

### CROSS-REFERENCE TO RELATED APPLICATIONS

This application claims priority to Chinese Patent Application No. 202310014852.5 filed on January 5, 2023, which is incorporated herein by reference in its entirety.

### TECHNICAL FIELD

This application relates to the field of battery technologies, and in particular, to a battery cell, a battery, and an electric device.

### BACKGROUND

With the rapid growth of portable electronic devices and electric vehicles, the demand for power batteries has also been increasing continuously. In addition, the electrochemical performance of batteries is receiving increasing attention.

An electrolyte solution is an important component of a lithium-ion battery, and determines components and a structure of a solid electrolyte two-phase interface (SEI) film on an electrode surface, which significantly influences the structural stability of an electrode and the cycle life of the lithium-ion battery. Optimizing the design of the electrolyte solution is a primary means of improving the lifetime of the lithium-ion battery. As the demand for energy density increases, a demand and a design of a ternary positive electrode have evolved from earliest low-nickel materials to current high-nickel materials. The overall lifetimes of the high-nickel materials are poor. On the one hand, an increase in nickel content inevitably leads to more lithium-nickel misalignment, and then the cycle life of a battery is reduced. On the other hand, an SEI film formed by a conventional lithium salt electrolyte solution contains a small amount of organic lithium, which causes co-intercalation of solvent molecules, thereby destroying the electrode material and reducing the cycle life.

### SUMMARY

The main objective of this application is to provide a battery cell, to improve the cycle life of a battery.

To implement the above objective, this application provides a battery cell. The battery cell comprises: an electrode assembly, comprising a positive electrode sheet, a negative electrode sheet, and a separator; and
an electrolyte solution, comprising an organic solvent and an electrolyte salt dissolved in the organic solvent, the electrolyte salt comprising a lithium salt and another alkali metal salt different from the lithium salt, where
a value of the compacted density of the positive electrode sheet is in a range of 2.8 g/cm³ to 4.0 g/cm³.

In the battery cell of this application, the electrolyte solution comprises the organic solvent and the electrolyte salt dissolved in the organic solvent, the electrolyte salt comprising the lithium salt and the another alkali metal salt different from the lithium salt, where the radii of other alkali metal ions in the another alkali metal salt are greater than those of lithium ions in the lithium salt. On the one hand, the radii of the other alkali metal ions are greater than those of the lithium ions, so that the other alkali metal ions can be intercalated into some lithium sites of a positive electrode in a first discharging process to play a supporting role, to enhance a misalignment energy barrier, alleviate a problem of Li/Ni misalignment of the positive electrode, improve the structural stability, and further improve cycling performance of the electrode assembly. On the other hand, the other alkali metal ions help increase components of organic lithium in an SEI in a formation process of an SEI film during first charging and discharging, thereby effectively reducing co-intercalation of solvent molecules, reducing a risk of damage to an electrode material caused by the co-intercalation of the solvent molecules, and greatly improving cycling performance of an electrode. In addition, the value of the compacted density of the positive electrode sheet is in the range of 2.8 g/cm³ to 4.0 g/cm³. When the compacted density is too low, there is a problem that the other alkali metal ions are intercalated into some lithium sites of the positive electrode and cannot play a supporting role, and it is difficult to effectively alleviate the problem of Li/Ni misalignment of the positive electrode. When the compacted density is too high, a gap between materials becomes small, there is a problem that the intercalation of the other alkali metal ions becomes difficult, it is difficult for the other alkali metal ions to be intercalated into some lithium sites in the positive electrode, and it is difficult to play a supporting role, resulting in a failure in prolonging the lifetime. The compacted density is set in the range of 2.8 g/cm³ to 4.0 g/cm³, so that the other alkali metal ions can be effectively intercalated into some lithium sites of the positive electrode and play an effective supporting role therein, thereby prolonging the service life of a battery.

Optionally, the value of the compacted density of the positive electrode sheet is in a range of 2.95 g/cm³ to 3.90 g/cm³.

When the compacted density is too low, there is a problem that the other alkali metal ions are intercalated into some lithium sites of the positive electrode and cannot play a supporting role. When the compacted density is too high, a gap between materials becomes small, and there is a problem that the intercalation of the other alkali metal ions becomes difficult, resulting in a failure in prolonging the lifetime. The compacted density is set in the range of 2.8 g/cm³ to 4.0 g/cm³, so that the other alkali metal ions can be effectively intercalated into some lithium sites of the positive electrode and play an effective supporting role therein. In the foregoing range of 2.95 g/cm³ to 3.90 g/cm³, values comprise the minimum value and the maximum value of this range and each value between the minimum value and the maximum value. Specific examples comprise, but are not limited to, point values in embodiments and 2.95 g/cm³, 3.0 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, or the like.

Optionally, the positive electrode sheet comprises a current collector and a positive electrode material disposed on the current collector, the positive electrode material having a layered structure.

The positive electrode material is a layered material, there is a gap between layers in the layered material, the gap between layers of the layered material is related to the compacted density, and when the compacted density is high, the layered structure is loose, a lithium-nickel spatial site is relatively large, and large ions such as sodium ions intercalated into the structure cannot play a supporting role, resulting in a failure in prolonging the lifetime. When the compacted density is low, the gap in the layered structure is extremely small, the intercalation of large ions such as sodium ions becomes difficult, also resulting in a failure in prolonging the lifetime. A positive electrode material with a layered structure positively correlated with the compacted density is used, and the stability of the positive electrode material during cycling is effectively improved through adjustment of the compacted density and the electrolyte solution.

Optionally, alkali metal ions in the another alkali metal salt comprise at least one of sodium ions, potassium ions, rubidium ions, and cesium ions.

The alkali metal ions in the another alkali metal salt comprise at least one of sodium ions, potassium ions, rubidium ions, and cesium ions, for example, may be one of sodium ions, potassium ions, rubidium ions, and cesium ions, or may comprise a plurality of types of ions at the same time, which is not specifically limited. The radii of these ions are greater than those of lithium ions, and these ions can be intercalated into some lithium sites of a layered positive electrode in a first discharging process, to improve the stability of a layered structure, alleviate a problem of Li/Ni misalignment in the layered positive electrode, and further improve cycling performance of the battery cell.

Optionally, the lithium salt comprises at least one of LiPF₆, LiBOB, LiODFB, LiTFOP, LiPO₂F₂, LiTFSI, LiFSI, or LiBODFP.

It can be understood that the lithium salt may comprise one of or a combination of a plurality of LiPF₆, LiBOB, LiODFB, LiTFOP, LiPO₂F₂, LiTFSI, LiFSI, or LiBODFP, which is not specifically limited. That is, the type of the lithium salt is not limited in this application, and any lithium salt that can be used in the electrolyte solution can be used in this application. The lithium salt cooperates with the another alkali metal salt different from the lithium salt in the electrolyte solution, and the radii of the other alkali metal ions in the another alkali metal salt are greater than those of the lithium ions in the lithium salt, so that the other alkali metal ions can be intercalated into some lithium sites of the layered positive electrode in the first discharging process, to improve the stability of the layered structure, and the other alkali metal ions help increase the components of the organic lithium in the SEI in the formation process of the SEI film during the first charging and discharging, thereby effectively reducing the co-intercalation of solvent molecules, reducing the risk of damage to an electrode material caused by the co-intercalation of the solvent molecules, and greatly improving cycling performance of the battery.

Optionally, the another alkali metal salt comprises at least one of NaPF₆, NaBOB, NaODFB, NaTFOP, NaPO₂F₂, NaTFSI, NaFSI, NaBODFP, KPF₆, KBOB, KODFB, KTFOP, KPO₂F₂, KTFSI, KFSI, or KBODFP.

It can understood that the another alkali metal salt comprises one of or a combination of a plurality of NaPF₆, NaBOB, NaODFB, NaTFOP, NaPO₂F₂, NaTFSI, NaFSI, NaBODFP, KPF₆, KBOB, KODFB, KTFOP, KPO₂F₂, KTFSI, KFSI, or KBODFP, which is not specifically limited.

Alternatively, the mass ratio of the lithium salt to the another alkali metal salt in the electrolyte salt is X:1, where X meets: 0.65≤X<1.

In consideration of a problem of capacity attenuation in a later period of use of a battery, and considering that a lithium salt in an electrolyte can supplement a loss of lithium during a battery cycle, that is, to alleviate a problem of capacity attenuation in a later period of a battery, an appropriate amount of a lithium salt should be added to an electrolyte solution. In addition, if all electrolytes in the electrolyte solution are another alkali metal salt, for example, a sodium salt, because Na is difficult to be intercalated into a material layer, resulting in a decrease in rate performance and also resulting in deterioration in electrical conductivity, a mass ratio of the lithium salt to the another alkali metal salt in the electrolyte salt is X:1, where X meets: 0.65≤X<1. In the above 0.65≤X<1, values comprise the minimum value and the maximum value of this range and each value between the minimum value and the maximum value. Specific examples comprise, but are not limited to, point values in embodiments and 0.65, 0.7, 0.75, 0.8, 0.85, 0.9, 0.95, or the like.

Optionally, 0.7≤X<0.9.

In the above 0.7≤X<0.9, values comprise the minimum value and the maximum value of this range and each value between the minimum value and the maximum value. Specific examples comprise, but are not limited to, point values in embodiments and 0.7, 0.75, 0.8, 0.85, 0.9, or the like.

Optionally, anions in the lithium salt are of the same type as anions in the another alkali metal salt.

Different anions have different electronegativities, and the anions enter a solvation layer and participate in a solvation structure reaction, to further accelerate decomposition of the electrolyte solution, resulting in an irreversible loss. In addition, different anions have different electronegativities in a solvation process, which may cause additional side reactions in a film formation process. Therefore, the anions in the lithium salt are of the same type as the anions in the another alkali metal salt.

Alternatively, the amount-of-substance concentration of the electrolyte salt in the electrolyte solution is 0.5 mol/L~2 mol/L.

The amount-of-substance concentration of the electrolyte salt in the electrolyte solution is 0.5 mol/L~2 mol/L. In the above range of 0.5 mol/L~2 mol/L, values comprise the minimum value and the maximum value of this range and each value between the minimum value and the maximum value. Specific examples comprise, but are not limited to, point values in embodiments and 0.5 mol/L, 0.8 mol/L, 1.0 mol/L, 1.2 mol/L, 1.5 mol/L, 1.8 mol/L, 2 mol/L, or the like.

Optionally, the organic solvent comprises one of or a plurality of dimethyl carbonate, ethyl methyl carbonate, methyl propyl carbonate, methyl formate, methyl acetate, methyl butyrate, ethyl propionate, ethylene carbonate, propylene carbonate, and diethyl carbonate.

It can be understood that the organic solvent comprises one of or a combination of a plurality of dimethyl carbonate, ethyl methyl carbonate, methyl propyl carbonate, methyl formate, methyl acetate, methyl butyrate, ethyl propionate, ethylene carbonate, propylene carbonate, and diethyl carbonate, which is not specifically limited.

Optionally, a value of the compacted density of the negative electrode sheet is in a range of 1 g/cm³ to 2.5 g/cm³.

The value of the compacted density of the negative electrode sheet is in the range of 1 g/cm³ to 2.5 g/cm³. When the compacted density is too low, there is a problem that other alkali metal ions are intercalated into a layered negative electrode and cannot play a supporting role. When the compacted density is too high, there is a problem that a gap between materials becomes small and the intercalation of the other alkali metal ions becomes difficult, resulting in a failure in prolonging the lifetime. The compacted density is set in this range, so that the other alkali metal ions can be effectively intercalated into the layered negative electrode and play an effective supporting role therein. In the above range of 1 g/cm³ to 2.5 g/cm³, values comprise the minimum value and the maximum value of this range and each value between the minimum value and the maximum value. Specific examples comprise, but are not limited to, point values in embodiments and 1.1 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2 g/cm³, 2.1 g/cm³, 2.2 g/cm³, 2.3 g/cm³, 2.4 g/cm³, 2.5 g/cm³, or the like.

Optionally, the value of the compacted density of the negative electrode sheet is in a range of 1.2 g/cm³ to 2 g/cm³.

In the above range of 1.2 g/cm³ to 2 g/cm³, values comprise the minimum value and the maximum value of this range and each value between the minimum value and the maximum value. Specific examples comprise, but are not limited to, point values in embodiments and 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2 g/cm³, or the like.

This application further provides a preparation method of a battery cell, comprising the following steps:
dissolving an electrolyte salt in an organic solvent to obtain an electrolyte solution, where the electrolyte solution comprises the organic solvent and the electrolyte salt dissolved in the organic solvent, the electrolyte salt comprising a lithium salt and another alkali metal salt different from the lithium salt; and
assembling a positive electrode sheet, a negative electrode sheet, and a separator to form an electrode assembly, placing the electrode assembly in a housing, injecting the electrolyte solution, and performing packaging to obtain a battery cell, where a value of the compacted density of the positive electrode sheet is in a range of 2.8 g/cm³ to 4.0 g/cm³.

In the battery cell obtained by the above preparation method, the electrolyte solution of the battery cell comprises the lithium salt and the another alkali metal salt different from the lithium salt. The radii of alkali metal ions in the another alkali metal salt are greater than those of lithium ions, and the alkali metal ions can be intercalated into some lithium sites of a layered positive electrode in a first discharging process, to improve the stability of a layered structure, and increase components of organic lithium in an SEI in a formation process of an SEI film during first charging and discharging, thereby improving co-intercalation of solvent molecules, and improving cycling performance of an electrode. In addition, the compacted density of the positive electrode sheet is set in the range of 2.8 g/cm³ to 4.0 g/cm³, so that other alkali metal ions can be efficiently intercalated into some lithium sites of the layered positive electrode and play an effective supporting role therein, further improving the cycling performance of the battery cell.

This application further provides a battery, comprising the battery cell described above, or the battery cell prepared by the preparation method of a battery cell.

This application further provides an electric device. The electric device comprises the battery cell described above, or the battery cell prepared by the foregoing preparation method of a battery cell, or the battery described above.

Because the cycling performance of the battery cell described above is also improved, the battery cell can be used for a relatively long time by the electric device using the battery cell, and costs of replacing the battery cell are reduced.

In the battery cell of this application, the electrolyte solution comprises the organic solvent and the electrolyte salt dissolved in the organic solvent, the electrolyte salt comprising the lithium salt and the another alkali metal salt different from the lithium salt, where the radii of other alkali metal ions in the another alkali metal salt are greater than those of lithium ions in the lithium salt. On the one hand, the radii of the other alkali metal ions are greater than those of the lithium ions, so that the other alkali metal ions can be intercalated into some lithium sites of a positive electrode in a first discharging process to play a supporting role, to enhance a misalignment energy barrier, alleviate a problem of Li/Ni misalignment of the positive electrode, improve the structural stability, and further improve cycling performance of the electrode assembly. On the other hand, the other alkali metal ions help increase components of organic lithium in an SEI in a formation process of an SEI film during first charging and discharging, thereby effectively reducing co-intercalation of solvent molecules, reducing a risk of damage to an electrode material caused by the co-intercalation of the solvent molecules, and greatly improving cycling performance of an electrode. In addition, the value of the compacted density of the positive electrode sheet is in the range of 2.8 g/cm³ to 4.0 g/cm³. When the compacted density is too low, there is a problem that the other alkali metal ions are intercalated into some lithium sites of the positive electrode and cannot play a supporting role, and it is difficult to effectively alleviate the problem of Li/Ni misalignment of the positive electrode. When the compacted density is too high, a gap between materials becomes small, there is a problem that the intercalation of the other alkali metal ions becomes difficult, it is difficult for the other alkali metal ions to be intercalated into some lithium sites in the positive electrode, and it is difficult to play a supporting role, resulting in a failure in prolonging the lifetime. The compacted density is set in the range of 2.8 g/cm³ to 4.0 g/cm³, so that the other alkali metal ions can be effectively intercalated into some lithium sites of the positive electrode and play an effective supporting role therein, thereby prolonging the service life of a battery.

### DESCRIPTION OF DRAWINGS

To describe technical solutions in embodiments of this application or in the conventional technology more clearly, the following briefly describes the accompanying drawings for describing the embodiments or the conventional technology. It is clear that the accompanying drawings described in the following are merely some embodiments of this application. Those of ordinary skill in the art can still derive other accompanying drawings from the structures shown by these accompanying drawings without creative efforts.
FIG. 1 is a schematic flowchart of a preparation method of a battery cell according to this application;
FIG. 2 is a schematic diagram of a battery cell according to an implementation of this application;
FIG. 3 is an exploded view of the battery cell shown in FIG. 2 according to an implementation of this application;
FIG. 4 is a schematic diagram of a battery module according to an implementation of this application;
FIG. 5 is a schematic diagram of a battery pack according to an implementation of this application;
FIG. 6 is an exploded view of the battery pack shown in FIG. 5 according to an implementation of this application; and

FIG. 7 is a schematic diagram of an electric apparatus in which an electrode assembly is used as a power supply according to an implementation of this application.

### Description of reference numerals:

| Reference numeral | Name | Reference numeral | Name |
|---|---|---|---|
| 1 | Battery pack | 51 | Housing |
| 2 | Upper case | 52 | Electrode assembly |
| 3 | Lower case | 53 | Cover plate |
| 4 | Battery module | 6 | Electric apparatus |
| 5 | Battery cell | | |

Purpose implementation, functional features, and advantages of this application are further described with reference to the embodiments and the accompanying drawings.

### DESCRIPTION OF EMBODIMENTS

The following describes in detail implementations specifically disclosing an electrolyte solution, an electrode assembly, a battery module, a battery pack, and an electric apparatus in this application with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

A "range" disclosed in this application is defined in terms of a lower limit and an upper limit. A given range is defined by
selecting a lower limit and an upper limit, and the selected lower limit and upper limit define a boundary of the special range. A range defined in this manner may include an end value or may not include an end value, and may be any combination, that is, any lower limit may be combined with any upper limit to form a range. For example, if ranges of 60~120 and 80~110 are listed for specific parameters, it is understood that the ranges of 60~110 and 80~120 are also expected. Furthermore, if the smallest values 1 and 2 of a range are listed, and if the largest values 3, 4 and 5 of the range are listed, the following ranges are all expected: 1~3, 1~4, 1~5, 2~3, 2~4, and 2~5. In this application, unless otherwise stated, a numerical range "a-b" represents a shorthand representation for a combination of any real numbers between a and b, where both a and b are real numbers. For example, a numerical range of "0~5" represents that all real numbers in the range of "0~5" have been listed herein, and "0~5" is merely a shorthand representation of combinations of these numerical values. Further, when a parameter is represented as an integer≥2, it is equivalent to disclosing that the parameter is, for example, an integer 2, 3, 4, 5, 6, 7, 8, 9, 10, 11, 12, or the like.

Unless otherwise specified, all implementations and optional implementations of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

An electrolyte solution is an important component of a lithium-ion battery, and determines components and a structure of a solid electrolyte two-phase interface (SEI) film on an electrode surface, which significantly influences the structural stability of an electrode and the cycle life of the lithium-ion battery. Optimizing the design of the electrolyte solution is a primary means of improving the lifetime of the lithium-ion battery. As the demand for energy density increases, a demand and a design of a ternary positive electrode have evolved from earliest low-nickel materials to current high-nickel materials. The overall lifetimes of the high-nickel materials are poor. On the one hand, an increase in nickel content inevitably leads to more lithium-nickel misalignment, and then the cycle life of a battery is reduced. The lithium-nickel misalignment refers to a phenomenon in which divalent Ni ions have a volume similar to that of lithium ions and occupy lattice positions of the Li ions due to an external factor when a large amount of lithium ions are deintercalated during discharging. Ion dislocation leads to a change in the type of a lattice, and accordingly changes the lithium intercalation capability of the lattice. During charging and discharging, the surface of a positive electrode material has the maximum pressure and the fastest speed for lithium deintercalation and intercalation, so that the surface often undergoes a change in a surface lattice due to such cation misalignment, and this phenomenon is also referred to as surface reconstruction. Higher Ni content indicates a higher probability that trivalent unstable Ni ions are reduced to divalent Ni ions, which increases the likelihood of cation misalignment and more severely reduces the cycle life of a battery.

On the other hand, an SEI film formed by a conventional lithium salt electrolyte solution contains a small amount of organic lithium, which causes a reduction in the effective thickness of the SEI film and results in co-intercalation of solvent molecules, thereby destroying the electrode material and reducing the cycle life.

To prolong the cycle life of a battery, this application provides a battery cell. The battery cell includes an electrode assembly and an electrolyte solution. The electrode assembly includes a positive electrode sheet, a negative electrode sheet, and a separator. The electrolyte solution includes an organic solvent and an electrolyte salt dissolved in the organic solvent. The electrolyte salt includes a lithium salt and another alkali metal salt different from the lithium salt. A value of the compacted density of the positive electrode sheet is in a range of 2.8 g/cm³ to 4.0 g/cm³.

The electrolyte solution, an electrolyte solution in a lithium battery, is a carrier for ion transport in the battery, and is generally composed of a lithium salt and an organic solvent. The electrolyte solution functions to conduct ions between the positive electrode and the negative electrode of the lithium battery, and is a guarantee for a lithium-ion battery to obtain advantages such as a high voltage and high specific energy. The electrolyte solution is generally prepared from raw materials such as a high-purity organic solvent, an electrolyte lithium salt, and a necessary additive in specific proportions under a specific condition.

The alkali metal salt refers to a salt including an alkali metal.

The positive electrode sheet includes a current collector and a positive electrode material disposed on the current collector.

The negative electrode sheet includes a current collector and a negative electrode material disposed on the current collector.

The compacted density=the areal density/(the thickness of the electrode sheet after roller compaction-the thickness of the current collector), unit: g/cm³.

On the one hand, the radii of other alkali metal ions in the electrolyte solution are greater than those of lithium ions, and these ions can be intercalated into some lithium sites of a positive electrode in a first discharging process, to improve structural stability, alleviate a problem of Li/Ni misalignment of the positive electrode, and further improve cycling performance of the electrode assembly. That is, the alkali metal ions having larger ionic radii are intercalated into some lithium sites of a cathode to play a supporting role, to enhance a misalignment energy barrier, alleviate a problem of Li/Ni misalignment aggravation of the cathode, improve the structural stability, and further improve the cycling performance.

On the other hand, the other alkali metal ions help increase components of organic lithium in an SEI in a formation process of an SEI film during first charging and discharging, thereby effectively reducing co-intercalation of solvent molecules, reducing a risk of damage to an electrode material caused by the co-intercalation of the solvent molecules, and greatly improving cycling performance of an electrode. It can be understood that the other alkali metal ions, such as large ions of sodium, can form an electrostatic shielding layer at an anode active site, to promote formation of a uniform and dense SEI film, reduce a loss of organic components due to side reactions, increase the thickness of the SEI film, and alleviate a problem of co-intercalation of the solvent molecules. In addition, the stability of the SEI film is improved, and the growth of a lithium dendrite can be inhibited.

When the compacted density of the positive electrode sheet is lower than 2.8 g/cm³, the structure is loose, a lithium-nickel spatial site is relatively large, and other alkali metal ions, for example, large ions such as sodium ions intercalated into the structure cannot play a supporting role, resulting in a failure in prolonging the lifetime. When the compacted density of the positive electrode sheet is higher than 4.0 g/cm³, a material gap is extremely small, the intercalation of other alkali metal ions, for example, large ions such as sodium ions becomes difficult, also resulting in a failure in prolonging the lifetime.

In the battery cell of this application, the electrolyte solution includes the organic solvent and the electrolyte salt dissolved in the organic solvent, the electrolyte salt including the lithium salt and the another alkali metal salt different from the lithium salt, where the radii of other alkali metal ions in the another alkali metal salt are greater than those of lithium ions in the lithium salt. On the one hand, the radii of the other alkali metal ions are greater than those of the lithium ions, so that the other alkali metal ions can be intercalated into some lithium sites of the positive electrode in the first discharging process to play a supporting role, to enhance a misalignment energy barrier, alleviate a problem of Li/Ni misalignment of the positive electrode, improve the structural stability, and further improve cycling performance of the electrode assembly. On the other hand, the other alkali metal ions help increase components of organic lithium in an SEI in a formation process of an SEI film during first charging and discharging, thereby effectively reducing co-intercalation of solvent molecules, reducing a risk of damage to an electrode material caused by the co-intercalation of the solvent molecules, and greatly improving cycling performance of an electrode. In addition, the value of the compacted density of the positive electrode sheet is in the range of 2.8 g/cm³ to 4.0 g/cm³. When the compacted density is too low, there is a problem that the other alkali metal ions are intercalated into some lithium sites of the positive electrode and cannot play a supporting role, and it is difficult to effectively alleviate the problem of Li/Ni misalignment of the positive electrode. When the compacted density is too high, a gap between materials becomes small, there is a problem that the intercalation of the other alkali metal ions becomes difficult, it is difficult for the other alkali metal ions to be intercalated into some lithium sites in the positive electrode, and it is difficult to play a supporting role, resulting in a failure in prolonging the lifetime. The compacted density is set in the range of 2.8 g/cm³ to 4.0 g/cm³, so that the other alkali metal ions can be effectively intercalated into some lithium sites of the positive electrode and play an effective supporting role therein, thereby prolonging the service life of a battery.

It can be understood that the value of the compacted density of the positive electrode sheet is in the range of 2.8 g/cm³ to 4.0 g/cm³. In the above range of 2.8 g/cm³ to 4.0 g/cm³, values include the minimum value and the maximum value of this range and each value between the minimum value and the maximum value. Specific examples include, but are not limited to, point values in embodiments and 2.8 g/cm³, 2.9 g/cm³, 3.0 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, 4.0 g/cm³, or the like.

Further, the value of the compacted density of the positive electrode sheet is in a range of 2.95 g/cm³ to 3.90 g/cm³.

When the compacted density is too low, there is a problem that the other alkali metal ions are intercalated into some lithium sites of the positive electrode and cannot play a supporting role. When the compacted density is too high, a gap between materials becomes small, and there is a problem that the intercalation of the other alkali metal ions becomes difficult, resulting in a failure in prolonging the lifetime. The compacted density is set in the range of 2.8 g/cm³ to 4.0 g/cm³, so that the other alkali metal ions can be effectively intercalated into some lithium sites of the positive electrode and play an effective supporting role therein. In the foregoing range of 2.95 g/cm³ to 3.90 g/cm³, values include the minimum value and the maximum value of this range and each value between the minimum value and the maximum value. Specific examples include, but are not limited to, point values in embodiments and 2.95 g/cm³, 3.0 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, or the like.

Further, the positive electrode sheet includes a current collector and a positive electrode material disposed on the current collector, the positive electrode material having a layered structure.

The positive electrode material is a layered material, there is a gap between layers in the layered material, the gap between layers of the layered material is related to the compacted density, and when the compacted density is high, the layered structure is loose, a lithium-nickel spatial site is relatively large, and large ions such as sodium ions intercalated into the structure cannot play a supporting role, resulting in a failure in prolonging the lifetime. When the compacted density is low, the gap in the layered structure is extremely small, the intercalation of large ions such as sodium ions becomes difficult, also resulting in a failure in prolonging the lifetime. A positive electrode material with a layered structure positively correlated with the compacted density is used, and the stability of the positive electrode material during cycling is effectively improved through adjustment of the compacted density and the electrolyte solution.

Further, alkali metal ions in the another alkali metal salt include at least one of sodium ions, potassium ions, rubidium ions, and cesium ions.

The alkali metal ions in the another alkali metal salt include at least one of sodium ions, potassium ions, rubidium ions, and cesium ions, for example, may be one of sodium ions, potassium ions, rubidium ions, and cesium ions, or may include a plurality of types of ions at the same time, which is not specifically limited. The radii of these ions are greater than those of lithium ions, and these ions can be intercalated into some lithium sites of a layered positive electrode in a first discharging process, to improve the stability of a layered structure, alleviate a problem of Li/Ni misalignment in the layered positive electrode, and further improve cycling performance of the battery cell.

Further, the lithium salt includes at least one of LiPF₆, LiBOB, LiODFB, LiTFOP, LiPO₂F₂, LiTFSI, LiFSI, or LiBODFP.

It can be understood that the lithium salt may include one of or a combination of a plurality of LiPF₆, LiBOB, LiODFB, LiTFOP, LiPO₂F₂, LiTFSI, LiFSI, or LiBODFP, which is not specifically limited. That is, the type of the lithium salt is not limited in this application, and any lithium salt that can be used in the electrolyte solution can be used in this application. The lithium salt cooperates with the another alkali metal salt different from the lithium salt in the electrolyte solution, and the radii of the other alkali metal ions in the another alkali metal salt are greater than those of the lithium ions in the lithium salt, so that the other alkali metal ions can be intercalated into some lithium sites of the layered positive electrode in the first discharging process, to improve the stability of the layered structure, and the other alkali metal ions help increase the components of the organic lithium in the SEI in the formation process of the SEI film during the first charging and discharging, thereby effectively reducing the co-intercalation of solvent molecules, reducing the risk of damage to an electrode material caused by the co-intercalation of the solvent molecules, and greatly improving cycling performance of the battery.

Further, the another alkali metal salt includes at least one of NaPF₆, NaBOB, NaODFB, NaTFOP, NaPO₂F₂, NaTFSI, NaFSI, NaBODFP, KPF₆, KBOB, KODFB, KTFOP, KPO₂F₂, KTFSI, KFSI, or KBODFP.

It can understood that the another alkali metal salt includes one of or a combination of a plurality of NaPF₆, NaBOB, NaODFB, NaTFOP, NaPO₂F₂, NaTFSI, NaFSI, NaBODFP, KPF₆, KBOB, KODFB, KTFOP, KPO₂F₂, KTFSI, KFSI, or KBODFP, which is not specifically limited.

Further, the mass ratio of the lithium salt to the another alkali metal salt in the electrolyte salt is X:1, where X meets: 0.65≤X<1.

In consideration of a problem of capacity attenuation in a later period of use of a battery, and considering that a lithium salt in an electrolyte can supplement a loss of lithium during a battery cycle, that is, to alleviate a problem of capacity attenuation in a later period of a battery, an appropriate amount of a lithium salt should be added to an electrolyte solution. In addition, if all electrolytes in the electrolyte solution are another alkali metal salt, for example, a sodium salt, because Na is difficult to be intercalated into a material layer, resulting in a decrease in rate performance and also resulting in deterioration in electrical conductivity, a mass ratio of the lithium salt to the another alkali metal salt in the electrolyte salt is X:1, where X meets: 0.65≤X<1. **In** the above 0.65≤X<1, values include the minimum value and the maximum value of this range and each value between the minimum value and the maximum value. Specific examples include, but are not limited to, point values in embodiments and 0.65, 0.7, 0.75, 0.8, 0.85, 0.9, 0.95, or the like.

It can be understood that different types of electrolyte salts in the electrolyte solution can be detected through ion chromatography. For example, the electrolyte salts include a lithium salt and a sodium salt, the concentrations of lithium ions and sodium ions can be obtained through ion chromatography, and the mass ratio of the lithium salt to the sodium salt can be obtained through conversion of concentration and mass.

Further, X meets: 0.7≤X<0.9.

In the above 0.7≤X<0.9, values include the minimum value and the maximum value of this range and each value between the minimum value and the maximum value. Specific examples include, but are not limited to, point values in embodiments and 0.7, 0.75, 0.8, 0.85, 0.9, or the like.

Further, anions in the lithium salt are of the same type as anions in the another alkali metal salt.

Different anions have different electronegativities, and the anions enter a solvation layer and participate in a solvation structure reaction, to further accelerate decomposition of the electrolyte solution, resulting in an irreversible loss. In addition, different anions have different electronegativities in a solvation process, which may cause additional side reactions in a film formation process. Therefore, the anions in the lithium salt are of the same type as the anions in the another alkali metal salt.

Further, the amount-of-substance concentration of the electrolyte salt in the electrolyte solution is 0.5 mol/L~2 mol/L.

The amount-of-substance concentration of the electrolyte salt in the electrolyte solution is 0.5 mol/L~2 mol/L. In the above range of 0.5 mol/L~2 mol/L, values include the minimum value and the maximum value of this range and each value between the minimum value and the maximum value. Specific examples include, but are not limited to, point values in embodiments and 0.5 mol/L, 0.8 mol/L, 1.0 mol/L, 1.2 mol/L, 1.5 mol/L, 1.8 mol/L, 2 mol/L, or the like.

Further, the organic solvent includes one of or a plurality of dimethyl carbonate, ethyl methyl carbonate, methyl propyl carbonate, methyl formate, methyl acetate, methyl butyrate, ethyl propionate, ethylene carbonate, propylene carbonate, and diethyl carbonate.

It can be understood that the organic solvent includes one of or a combination of a plurality of dimethyl carbonate, ethyl methyl carbonate, methyl propyl carbonate, methyl formate, methyl acetate, methyl butyrate, ethyl propionate, ethylene carbonate, propylene carbonate, and diethyl carbonate, which is not specifically limited.

Further, a value of the compacted density of the negative electrode sheet is in a range of 1 g/cm³ to 2.5 g/cm³.

The value of the compacted density of the negative electrode sheet is in the range of 1 g/cm³ to 2.5 g/cm³. When the compacted density is too low, there is a problem that other alkali metal ions are intercalated into a layered negative electrode and cannot play a supporting role. When the compacted density is too high, there is a problem that a gap between materials becomes small and the intercalation of the other alkali metal ions becomes difficult, resulting in a failure in prolonging the lifetime. The compacted density is set in this range, so that the other alkali metal ions can be effectively intercalated into the layered negative electrode and play an effective supporting role therein. In the above range of 1 g/cm³ to 2.5 g/cm³, values include the minimum value and the maximum value of this range and each value between the minimum value and the maximum value. Specific examples include, but are not limited to, point values in embodiments and 1.1 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2 g/cm³, 2.1 g/cm³, 2.2 g/cm³, 2.3 g/cm³, 2.4 g/cm³, 2.5 g/cm³, or the like.

Further, the value of the compacted density of the negative electrode sheet is in a range of 1.2 g/cm³ to 2 g/cm³.

In the above range of 1.2 g/cm³ to 2 g/cm³, values include the minimum value and the maximum value of this range and each value between the minimum value and the maximum value. Specific examples include, but are not limited to, point values in embodiments and 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2 g/cm³, or the like.

This application also provides a preparation method of a battery cell, including the following steps: dissolving an electrolyte salt in an organic solvent to obtain an electrolyte solution, where the electrolyte solution includes the organic solvent and the electrolyte salt dissolved in the organic solvent, the electrolyte salt including a lithium salt and an alkali metal salt different from the lithium salt; assembling a positive electrode sheet, a negative electrode sheet, and a separator to form an electrode assembly, placing the electrode assembly in a housing, injecting the electrolyte solution, and performing packaging to obtain a battery cell, where a value of the compacted density of the positive electrode sheet is in a range of 2.8 g/cm³ to 4.0 g/cm³.

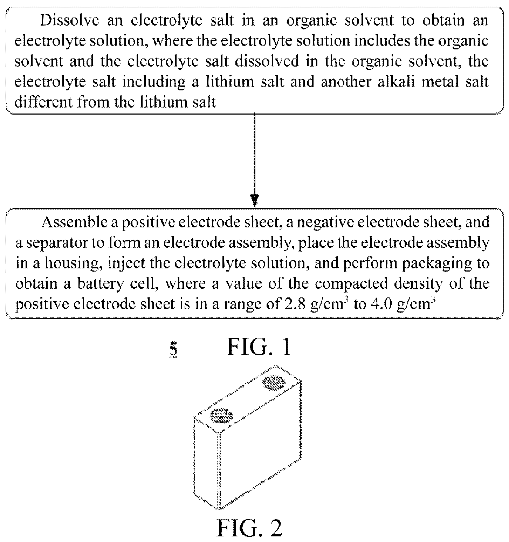

As shown in FIG. 1, in the battery cell obtained by the above preparation method, the electrolyte solution of the battery cell includes the lithium salt and the another alkali metal salt different from the lithium salt. The radii of alkali metal ions in the another alkali metal salt are greater than those of lithium ions, and the alkali metal ions can be intercalated into some lithium sites of a layered positive electrode in a first discharging process, to improve the stability of a layered structure, and increase components of organic lithium in an SEI in a formation process of an SEI film during first charging and discharging, thereby reducing co-intercalation of solvent molecules, and improving cycling performance of an electrode. In addition, the compacted density of the positive electrode sheet is set in the range of 2.8 g/cm³ to 4.0 g/cm³, so that other alkali metal ions can be efficiently intercalated into some lithium sites of the layered positive electrode and play an effective supporting role therein, further improving the cycling performance of the battery cell.

This application further provides a battery, including the battery cell described above, or the battery cell prepared by the preparation method of a battery cell.

Because the battery cell described above has high cycling performance, the cycling performance of the battery is also improved.

This application further provides an electric device. The electric device includes the battery cell described above, or the battery cell prepared by the foregoing preparation method of a battery cell, or the battery described above.

Because the cycling performance of the battery cell described above is also improved, the battery cell can be used for a relatively long time by the electric device using the battery cell, and costs of replacing the battery cell are reduced.

In addition, the following appropriately describes an electrode assembly, a battery (including a battery module and a battery pack), and an electric apparatus of this application with reference to the accompanying drawings.

In one implementation of this application, an electrode assembly is provided.

Generally, the electrode assembly includes a positive electrode sheet, a negative electrode sheet, an electrolyte, and a separator. During charging and discharging of a battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through. The separator is the improved separator described above in this application.

The positive electrode sheet includes a positive electrode current collector and a positive electrode film layer disposed on at least one surface of the positive electrode current collector.

As an example, the positive electrode current collector has two surfaces opposite in its own thickness direction, and the positive electrode film layer is disposed on either one or both of the two opposite surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, or the like) on a polymer material substrate (e.g., a substrate of polypropylene (PP), polyethylene terephthalate (PET), polybutylene terephthalate (PBT), polystyrene (PS), or polyethylene (PE)).

In some implementations, when the electrode assembly is a lithium-ion battery, a positive electrode active material may be a positive electrode active material well-known in the art for lithium-ion batteries. As an example, the positive electrode active material may include at least one of the following materials: lithium-contained phosphate with an olivine structure, lithium transition metal oxide, and their respective modified compounds. However, this application is not limited to these materials, and another conventional material that can be used as a positive electrode active material of a battery may also be used. One of these positive electrode active materials may be used alone or two or more thereof may be combined for use. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂, or Limn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂) and a modified compound thereof, or the like. Examples of the lithium-contained phosphate with an olivine structure may include, but are not limited to, at least one of lithium iron phosphate (e.g., LiFePO₄ (also simply referred to as LFP)), a composite material of lithium iron phosphate and carbon, lithium manganese phosphate (e.g., LiMnPO₄), a composite material of lithium manganese phosphate and carbon, lithium ferro-manganese phosphate, or a composite material of lithium ferro-manganese phosphate and carbon.

Deintercalation and consumption of Li occur during charging and discharging of the battery, and the molar content of Li varies when the battery is discharged to different states. In the enumeration of the positive electrode material in this application, the molar content of Li is an initial state of the material, i.e., a state before adding. The positive electrode material is applied to a battery system, and the molar content of Li changes after charging and discharging cycles.

In the enumeration of the positive electrode material in this application, the molar content of O is only a theoretical state value, the molar content of oxygen changes due to the release of oxygen from a lattice, and the actual molar content of O fluctuates.

In some implementations, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode sheet may be prepared in the following manner: dispersing the above-mentioned components for preparing the positive electrode sheet, for example, the positive electrode active material, the conductive agent, the binder, and any other component in a solvent (e.g., N-methylpyrrolidone) to form a positive electrode slurry; and coating the positive electrode slurry on the positive electrode current collector, and performing procedures such as drying and cold pressing, to obtain the positive electrode sheet.

The negative electrode sheet includes a negative electrode current collector and a negative electrode film layer disposed on at least one surface of the negative electrode current collector, the negative electrode film layer including a negative electrode active material.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some implementations, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes another auxiliary agent, for example, a thickening agent (e.g., sodium carboxymethyl cellulose (CMC-Na)).

In some implementations, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

The electrolyte functions to conduct ions between the positive electrode sheet and the negative electrode sheet. The type of the electrolyte is not specifically limited in this application, and may be selected according to a requirement.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

In some implementations, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the electrode assembly further includes a separator. The type of the separator is not particularly limited in this application, and any well-known porous separator with good chemical stability and mechanical stability may be used.

In some implementations, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which not particularly limited.

In some implementations, the positive electrode sheet, the negative electrode sheet, and the separator may be manufactured into the electrode assembly through a winding process or a lamination process.

In some implementations, the electrode assembly may include an outer package. The outer package may be used to package the electrode assembly and the electrolyte.

In some implementations, the outer package of the electrode assembly may be a hard casing, for example, a hard plastic casing, an aluminum casing, or a steel casing. The outer package of the electrode assembly may alternatively be a pouch, such as a bag-type pouch. The material of the pouch may be plastic, and examples of the plastic include polypropylene, polybutylene terephthalate, polybutylene succinate, and the like.

The shape of the electrode assembly is not particularly limited in this application, and may be cylindrical, square, or any other shape. For example, FIG. 2 shows a battery cell 5 with a square structure as an example.

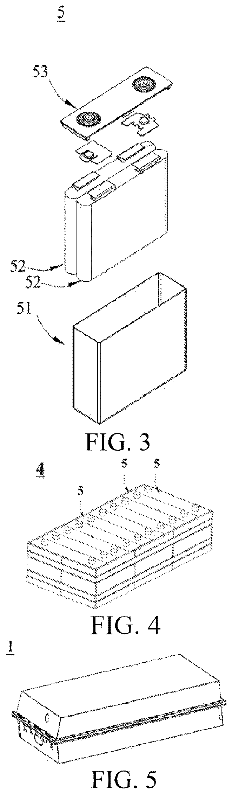

In some implementations, referring to FIG. 3, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into the electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and those skilled in the art may select according to specific actual requirements.

In some implementations, the electrode assembly may be assembled into a battery module, there may be one or a plurality of electrode assemblies included in the battery module, and those skilled in the art may select a specific quantity based on the application and capacity of the battery module.

FIG. 4 shows a battery module 4 as an example. Referring to FIG. 4, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a housing having an accommodating space in which the plurality of battery cells 5 are accommodated.

In some implementations, the above-mentioned battery module may be further assembled into a battery pack, there may be one or a plurality of battery modules included in the battery pack, and those skilled in the art may select a specific quantity based on the application and capacity of the battery pack.

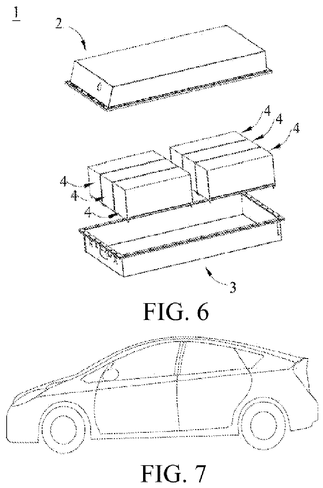

FIG. 5 and FIG. 6 show a battery pack 1 as an example. Referring to FIG. 5 and FIG. 6, the battery pack 1 may include a battery case and a plurality of battery modules 4 disposed in the battery case. The battery case includes an upper case 2 and a lower case 3, the upper case 2 being capable of covering on the lower case 3 to form a closed space for accommodating the battery modules 4. The plurality of battery modules 4 may be arranged in any manner in the battery case.

In addition, this application further provides an electric apparatus including at least one of the electrode assembly, the battery module, or the battery pack provided by this application. The electrode assembly, the battery module, or the battery pack may be used as a power supply of the electric apparatus and may also be used as an energy storage unit of the electric apparatus. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As an electric apparatus, an electrode assembly, a battery module, or a battery pack may be selected according to a usage requirement of the electric apparatus.

FIG. 7 shows an electric apparatus as an example. The electric apparatus is a battery electric vehicle, a hybrid electric vehicle, a plug-in hybrid electric vehicle, or the like. To meet a requirement for a high power and a high energy density of an electrode assembly by the electric apparatus, a battery pack or a battery module may be used.

In another example, the apparatus may be a cell phone, a tablet computer, a notebook computer, or the like. This apparatus is generally required to be thin and lightweight, and an electrode assembly can be used as a power supply.

### Embodiments

Preparation of an electrolyte solution of a battery: A mixture of ethylene carbonate (EC), propylene carbonate (PC), and diethyl carbonate (DEC) is used as a non-aqueous organic solvent, where a mass ratio of the components is EC:PC:DEC=30:30:40, and a salt in the electrolyte solution may be a combined salt of a base lithium salt and a homologous cathode-optimized salt of the base lithium (with the same coordinating anions), to prepare an electrolyte solution with the concentration of 1 M.

Preparation of a cathode sheet (positive electrode sheet) of the battery: (1) Polyvinylidene fluoride (PVDF), a positive electrode material, and a conductive agent (carbon black Super P) are mixed based on a mass ratio 90:5:5, N-methyl-pyrrolidone (NMP) is used as a solvent, a solvent addition amount is adjusted to control the viscosity of a slurry to 100 to 20000 mPa.s., and the slurry is coated on a cathode current collector by using a coating or spraying machine. Cold pressing is performed after drying at 85°C, the compacted density of the cathode sheet is set in a range of 2.8 g/cm³ to 4.0 g/cm³, then edging, cutting, and slitting are performed, then drying is performed under a vacuum condition at 85°C for 4 hours, and tabs are welded, to obtain a battery cathode sheet meeting requirements.

Preparation of an anode sheet (negative electrode sheet) of the battery: An active substance graphite, a conductive agent Super-P, a thickening agent CMC, and an adhesive SBR are added to solvent deionized water based on a mass ratio of 96.5:1.0:1.0:1.5 and are uniformly mixed to prepare an anode slurry; and the anode slurry is coated on a copper foil of a current collector and is dried at 85°C, then edging, cutting, and slitting are performed, then drying is performed under a vacuum condition at 110°C for 4 hours, and tabs are welded, to obtain a battery anode sheet meeting requirements.

Preparation of the battery: A polypropylene thin film of 12 µm is used as a separator, the cathode sheet, the separator, and the anode sheet are sequentially overlapped, the separator is placed between the cathode sheet and the anode sheet to play a separating role, and then winding is performed to obtain a square bare cell with the thickness of 8 mm, the width of 60 mm, and the length of 130 mm. The bare cell is placed in an aluminum foil packaging bag and vacuum-baked at 75°C for 10 hours, and then the packaging bag is filled with the electrolyte solution, vacuum-sealed, left to stand for 24 hours, then charged to 4.35 V with a constant current of 0.1 C (160 mA), then charged with a constant voltage of 4.35 V until the current is dropped to 0.05 C (80 mA), then discharged to 3.0 V with a constant current of 0.1 C (160 mA), charged and discharged repeatedly twice, and finally charged to 3.8 V with a constant current of 0.1 C (160 mA), to complete the preparation of the battery.

### First Embodiment

Preparation of an electrolyte solution of a battery: A mixture of ethylene carbonate (EC), propylene carbonate (PC), and diethyl carbonate (DEC) is used as a non-aqueous organic solvent, where a mass ratio of the components is EC:PC:DEC=30:30:40, and a salt in the electrolyte solution is LiPF₆/NaPF₆, and a mass ratio of LiPF₆/NaPF₆ is 0.65, to prepare an electrolyte solution with the concentration of 1 M. The compacted density of a cathode sheet is 3.3 g/cm³, and the preparation of others is the same. The preparation of an anode sheet and the preparation of the battery are the same as those described above.

On the basis of Embodiment 1, the components of an electrolyte in the electrolyte solution and the compacted density of the positive electrode sheet are changed to obtain Embodiment 2 and Embodiment 3, and specific parameters are shown in Table 1.

On the basis of Embodiment 1, the mass ratio of different types of electrolytes and the compacted density of the positive electrode sheet are changed to obtain Embodiment 4 to Embodiment 8, and specific parameters are shown in Table 1.

On the basis of Embodiment 1, the components of the electrolyte solution are changed to obtain Comparative Example 1 to Comparative Example 3, and specific parameters are shown in Table 1.

On the basis of Embodiment 1, the compacted density of the positive electrode sheet is changed to obtain Comparative Example 4 and Comparative Example 5, and the specific parameters are shown in Table 1.

### Electrical Performance Characterization

### Cycling performance test:

Test conditions for test cycles are as follows: 1C/1C cycle tests are performed on a secondary battery at 25°C and 45°C, a charging and discharging voltage range is 2.8 V~4.35 V, and the tests are stopped when the capacity attenuates to 80% of the first discharge specific capacity.

**Table 1 Table of Parameters Related to Embodiments**

| Classification | Electrolyte solution | Mass ratio of different types of electrolytes | Compacted density of the positive electrode sheet g/cm³ | 25°C 1C/1C cycle life @ 80% SOH | 45°C 1C/1C cycle life @ 80% SOH |
|---|---|---|---|---|---|
| Embodiment 1 | LiPF₆/NaPF₆ | 0.65:1 | 3.30 | 3500 | 2100 |
| Embodiment 2 | LiPF₆/KPF₆ | 0.65:1 | 3.50 | 2500 | 1700 |
| Embodiment 3 | LiBOB/NaBOB | 0.65:1 | 3.70 | 1800 | 1200 |
| Embodiment 4 | LiPF₆/NaPF₆ | 0.65:1 | 2.8 | 3000 | 1700 |
| Embodiment 5 | LiPF₆/NaPF₆ | 0.65:1 | 4.0 | 2800 | 1500 |
| Embodiment 6 | LiPF₆/NaPF₆ | 0.7:1 | 3.0 | 2500 | 1300 |
| Embodiment 7 | LiPF₆/NaPF₆ | 0.9:1 | 3.8 | 2200 | 1200 |
| Embodiment 8 | LiPF₆/NaPF₆ | 0.9:1 | 3.0 | 2900 | 1400 |
| Comparative Example 1 | LiPF₆ | / | 3.30 | 2000 | 1000 |
| Comparative Example 2 | LiPF₆ | / | 3.50 | 2000 | 1000 |
| Comparative Example 3 | LiBOB | / | 3.70 | 1000 | 500 |
| Comparative Example 4 | LiPF₆/NaPF₆ | 0.65:1 | 2.70 | 2000 | 1000 |
| Comparative Example 5 | LiPF₆/NaPF₆ | 0.65:1 | 4.20 | 2000 | 1000 |

It can be learned from Table 1 that the cycle life of the battery that includes the electrolyte solution composed of the lithium salt and another alkali metal salt different from the lithium salt is prolonged, which indicates that the radii of other alkali metal ions are greater than those of lithium ions, so that the other alkali metal ions can be intercalated into some lithium sites of a layered positive electrode in a first discharging process, to improve the stability of the layered structure, and the other alkali metal ions help increase components of organic lithium in an SEI in a formation process of an SEI film during first charging and discharging, thereby effectively reducing co-intercalation of solvent molecules, reducing a risk of damage to an electrode material caused by the co-intercalation of the solvent molecules, and greatly improving cycling performance of an electrode.

In addition, as shown in Embodiment 6 and Embodiment 8, in a specific condition, the increase in the quality of the lithium salt help prolong the cycle life. For example, when the amount of the lithium salt does not meet normal lithium consumption, an increase of the lithium salt helps prolong the cycle life.

As shown in Embodiment 1, Embodiment 4, Embodiment 5, Comparative Example 4, and Comparative Example 5, when the compacted density of the positive electrode sheet is less than 2.8 g/cm³, the layered structure is loose, a lithium-nickel spatial site is relatively large, and the other alkali metal ions, for example, large ions such as sodium ions intercalated into the structure cannot play a supporting role, resulting in a failure in prolonging the lifetime. When the compacted density of the positive electrode sheet is higher than 4.0 g/cm³, a material gap is extremely small, the intercalation of the other alkali metal ions, for example, large ions such as sodium ions becomes difficult, also resulting in a failure in prolonging the lifetime.

The foregoing are only preferred embodiments of this application, and are not intended to limit the patent scope of this application, and any equivalent structural modifications made by using the content of the specification and the accompanying drawings of this application under the concept of this application, directly/indirectly applied in other related technical fields, are included in the patent protection scope of this application.

## Claims

1. A battery cell (5), comprising: an electrode assembly (52), comprising a positive electrode sheet, a negative electrode sheet, and a separator; and
an electrolyte solution, comprising an organic solvent and an electrolyte salt dissolved in the organic solvent, the electrolyte salt comprising a lithium salt and another alkali metal salt different from the lithium salt, wherein
a value of the compacted density of the positive electrode sheet is in a range of 2.8 g/cm³ to 4.0 g/cm³.

2. The battery cell (5) according to claim 1, wherein the value of the compacted density of the positive electrode sheet is in a range of 2.95 g/cm³ to 3.90 g/cm³.

3. The battery cell (5) according to claim 1 or 2, wherein the positive electrode sheet comprises a current collector and a positive electrode material disposed on the current collector, the positive electrode material having a layered structure.

4. The battery cell (5) according to any one of claims 1 to 3, wherein alkali metal ions in the another alkali metal salt comprise at least one of sodium ions, potassium ions, rubidium ions, and cesium ions.

5. The battery cell (5) according to any one of claims 1 to 4, wherein the lithium salt comprises at least one of LiPF₆, LiBOB, LiODFB, LiTFOP, LiPO₂F₂, LiTFSI, LiFSI, or LiBODFP.

6. The battery cell (5) according to any one of claims 1 to 5, wherein the another alkali metal salt comprises at least one of NaPF₆, NaBOB, NaODFB, NaTFOP, NaPO₂F₂, NaTFSI, NaFSI, NaBODFP, KPF₆, KBOB, KODFB, KTFOP, KPO₂F₂, KTFSI, KFSI, or KBODFP.

7. The battery cell (5) according to any one of claims 1 to 6, wherein the mass ratio of the lithium salt to the another alkali metal salt in the electrolyte salt is X:1, wherein X meets: 0.65≤X<1.

8. The battery cell (5) according to claim 7, wherein X meets: 0.7≤X<0.9.

9. The battery cell (5) according to any one of claims 1 to 8, wherein anions in the lithium salt are of the same type as anions in the another alkali metal salt.

10. The battery cell (5) according to any one of claims 1 to 9, wherein the amount-of-substance concentration of the electrolyte salt in the electrolyte solution is 0.5 mol/L~2 mol/L.

11. The battery cell (5) according to any one of claims 1 to 10, wherein the organic solvent comprises one of or a plurality of dimethyl carbonate, ethyl methyl carbonate, methyl propyl carbonate, methyl formate, methyl acetate, methyl butyrate, ethyl propionate, ethylene carbonate, propylene carbonate, and diethyl carbonate.

12. The battery cell (5) according to any one of claims 1 to 11, wherein a value of the compacted density of the negative electrode sheet is in a range of 1 g/cm³ to 2.5 g/cm³.

13. The battery cell (5) according to any one of claims 1 to 12, wherein the value of the compacted density of the negative electrode sheet is in a range of 1.2 g/cm³ to 2 g/cm³.

14. A preparation method of the battery cell (5) according to any one of claims 1 to 13, comprising the following steps:
dissolving an electrolyte salt in an organic solvent to obtain an electrolyte solution, wherein the electrolyte solution comprises the organic solvent and the electrolyte salt dissolved in the organic solvent, the electrolyte salt comprising a lithium salt and another alkali metal salt different from the lithium salt; and
assembling a positive electrode sheet, a negative electrode sheet, and a separator to form an electrode assembly (52), placing the electrode assembly (52) in a housing, injecting the electrolyte solution, and performing packaging to obtain a battery cell (5), wherein a value of the compacted density of the positive electrode sheet is in a range of 2.8 g/cm³ to 4.0 g/cm³.

15. A battery, comprising the electrode monomer according to any one of claims 1 to 13 or the battery cell (5) prepared by the preparation method of a battery cell (5) according to claim 14.

16. An electric device, wherein the electric device comprises the battery cell (5) according to any one of claims 1 to 13;
or the electric device comprises the battery cell (5) prepared by the preparation method of a battery cell (5) according to claim 14;
or the electric device comprises the battery according to claim 15.
